Europäisches Patentamt

European Patent Office

Office européen des brevets

(19)

(11) **EP 0 924 870 A2**

(12) **EUROPEAN PATENT APPLICATION**

(43) Date of publication:
23.06.1999 Bulletin 1999/25

(51) Int Cl.⁶: **H04B 1/707**

(21) Application number: 98309844.3

(22) Date of filing: 01.12.1998

(84) Designated Contracting States:
AT BE CH CY DE DK ES FI FR GB GR IE IT LI LU MC NL PT SE
Designated Extension States:
AL LT LV MK RO SI

(30) Priority: 15.12.1997 US 990626

(71) Applicant: LUCENT TECHNOLOGIES INC.
Murray Hill, New Jersey 07974-0636 (US)

(72) Inventors:
• Knisely, Douglas
  Wheaton, Illinois 60187 (US)
• Meyers, Martin Howard
  Montclair, New Jersey 07043 (US)
• Kuo, Wen-Yi
  Parsippany, New Jersey 07054 (US)
• Nanda, Sanjiv
  Plainsboro, New Jersey 08536 (US)

(74) Representative:
Buckley, Christopher Simon Thirsk et al
Lucent Technologies (UK) Ltd,
5 Mornington Road
Woodford Green, Essex IG8 0TU (GB)

(54) **Reducing peak to average ratio of transmit signal by intentional phase rotating among composed signals**

(57) Apparatus for reducing power amplifier headroom in a wireless transmission system comprises an orthogonal modulation circuit (32,34) and a phase rotation circuit (70) coupled to the orthogonal modulation circuit. The orthogonal modulation circuit utilizes a Walsh code for modulating an in-phase signal and a quadrature signal. The orthogonal modulation circuit has an in-phase output ($S_{I,K}$) and a quadrature output ($S_{Q,K}$). The phase rotation circuit (70) rotates the phase of the in-phase signal and the quadrature signal, producing a phase rotated in-phase signal and a phase rotated quadrature signal. Multiple Walsh code defined channels are associated with a particular wireless user.

FIG. 2

## Description

### Field Of The Invention

This invention relates to wireless communications, and more particularly to code division multiple access (CDMA) wireless communications.

### Background Of The Invention

Wireless communication provides tetherless access to mobile users and addresses requirements of two specific and disjoint domains: voice telephony and indoor data LANs. Cellular telephone networks have extended the domain of telephone service over a wireless last hop, while mobile-IP LANs such as WaveLAN and RangeLAN do the same for indoor users of TCP/IP data networks. Advances with wireless technology and high-speed integrated service wired networking promises to provide mobile users with comprehensive multimedia information access in the near future. For example, Personal Communication Services (PCS) are a broad range of individualized telecommunication services which enable individuals or devices to communicate irrespective of where they are at anytime. Personal Communication Networks (PCN) are a new type of wireless telephone system communicating via low-power antennas. PCNs offer a digital wireless alternative to the traditional wired line.

The following represent areas of concern in wireless technology, for example, in any wireless communication system, transmitter power has an important impact on system performance. In a noise limited wireless communication system, the transmitted power determines the allowable separation between the transmitter and receiver. The available transmitted power determines the signal-to-noise ratio, which must exceed some prescribed threshold at the receiver input for successful communication of information to occur.

In a base station, peak to average ratio is a major limiting factor for power amplifier efficiency. In the forward link, the base station transmits aggregate signals of all served wireless users by adding their signal together and then amplifying the aggregate signal with a single amplifier. Typically, the power amplifier of the base station is de-rated. The de-rating is necessary in order to leave amplifier head room for the allowable average transmit power to account for the peak to average ratio of the aggregate signal. Since the coverage of the base station significantly depends on the allowable average transmit power of the power amplifier, it would be a significant advantage to reduce the peak to average ratio and thus reduce the amplifier de-rating.

### Summary Of The Invention

The present invention is an apparatus for reducing power amplifier headroom in a wireless transmission system. The apparatus comprises an orthogonal modulation circuit and a phase rotation circuit coupled to the orthogonal modulation circuit. The orthogonal modulation circuit utilizes a Walsh code for modulating an in-phase signal and a quadrature signal. The orthogonal modulation circuit has an in-phase output and a quadrature output. The phase rotation circuit rotates phase of the in-phase signal and the quadrature signal, producing a phase rotated in-phase signal and a phase rotated quadrature signal. Multiple Walsh channels are associated with a particular wireless user. A method for implementing the present invention is also described.

### Brief Description Of The Drawings

A more complete understanding of the present invention may be obtained from consideration of the following description in conjunction with the drawings in which:

FIG. 1 is a representative block diagram of a typical wireless network;

FIG. 2 is a diagrammatic representation of an embodiment of intentional phase rotation in a CDMA base station;

FIG. 3 is a graphical representation of an example of $P(\phi|Y)$ by all possible $b_k$'s at $N_h=N=5$;

FIG. 4 is a graphical representation of $A(\phi|Y)$ at $N_h=N=5$; and,

FIG. 5 is a graphical representation of peak power reduction in dB vs. number of channels of a HSD user.

## Detailed Description Of Various Illustrative Embodiments

Although the present invention is particularly well suited for a CDMA system and shall be so described, the present invention is equally well suited for use with other wireless systems including but not limited to Wideband CDMA (W-CDMA), Time Division Multiple Access (TDMA) and Groupe Speciale Mobile, now known as Global System for Mobile communications (GSM).

CDMA modulation techniques are employed in communication systems in order to permit a large number of users to communicate with one another. In a typical CDMA communication system, all communication channels are multiplexed into one or several common broadband frequencies. Each channel is differentiated by a unique spreading code. Prior to transmission, each channel's information signal is modulated with a spreading code in order to convert the information signal into a broadband signal. A receiver demodulates the received broadband signal by combining the broadband signal with the corresponding spreading code to recover the information signal. The spreading code is typically a binary code. Since the same frequency band is available to all users, information signals in other channels may appear as co-channel interference or noise when the received signal is demodulated by the spreading code.

Transmitter power is an important system performance factor. In a noise limited wireless communication system, it is the transmitted power which determines the maximum allowable separation between the transmitter and receiver. The available transmitted power determines the signal-to-noise ratio, which must exceed some prescribed threshold at the receiver input for the successful communication of information to occur.

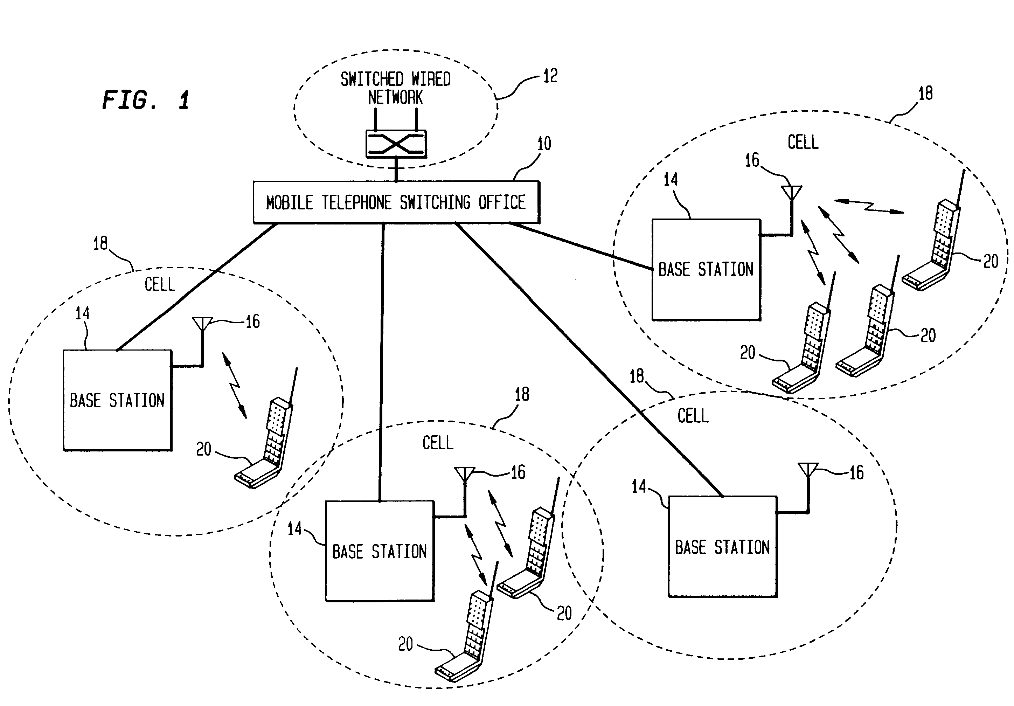

Referring now to FIG. 1 there is shown a representative block diagram of a typical wireless communication network. A Mobile Telephone Switching Office (MTSO) 10, also know as a Mobile Switching Center (MSC), provides for switching calls between the wireless network and the switched wired network 12. The MTSO 10 controls the entire operation of a wireless communication system, setting up and monitoring all wireless calls, and tracking the location of all wireless-equipped vehicles traveling in the system, arranging hand-offs, and providing billing information. The MTSO 10 is connected to a plurality of base stations 14. The base station 14 is a fixed position multi-channel transceiver in the wireless network, which is coupled through a radio port to an antenna 16. The geographical area for which the base station 14 acts as the communication gateway is called a cell 18, the various base station 14 cell nodes are distributed in suitable locations. A mobile unit 20 communicates with the base station 14 within a particular cell 18 through a forward link and a reverse link.

Peak to average ratio transmitter power is a major limiting factor for power amplifier efficiency. In the forward link, the base station 14 transmits aggregate signals of all served wireless users by adding their signal together and then amplifying the aggregate with a single amplifier. When the signals for different users are in phase, the aggregate signal's peak to average ratio will be the worst case due to the constructive sum of sinusoidal wave forms. In the IS-95 standard, signals for different users are in phase. Typically, the power amplifier of the base station is de-rated. By de-rating the power amplifier sufficient amplifier head room can be left for the allowable average transmit power, in order to account for the peak to average ratio. Since the coverage of the base station significantly depends on the allowable average transmit power of the power amplifier, it would be a significant advantage to reduce the peak to average ratio and thus reduce the de-rating of the power amplifier.

Recently, there have been proposals for high speed data (HSD) services for the IS-95-B and Wide-band CDMA systems. Basically the new feature allows a single wireless user the ability to use multiple Walsh channels. When a HSD user is under a high interference situation where the HSD user will require high power consumption to maintain the call, the power limitation for the base station will be reached sooner. That is, there will be more deficiencies in the link power budget with the HSD user(s) due to loss of the users' randomness.

The present invention utilizes intentional phase rotation among different Walsh channels for the same HSD user. In this way, the operation is still backward compatible with the older IS-95 standard phones (i.e., maintaining the orthogonal modulation) while permitting the head room reserved for the power amplifier to be reduced which enables an improvement in coverage/capacity to be achieved. While a selected wireless user which is to utilize intentional phase rotation typically can be an HSD user, the present invention can be used for all of the wireless users served by the same base station including voice users which occupy only one Walsh channel. The present invention can equally be utilized with other HSD users at the same time.

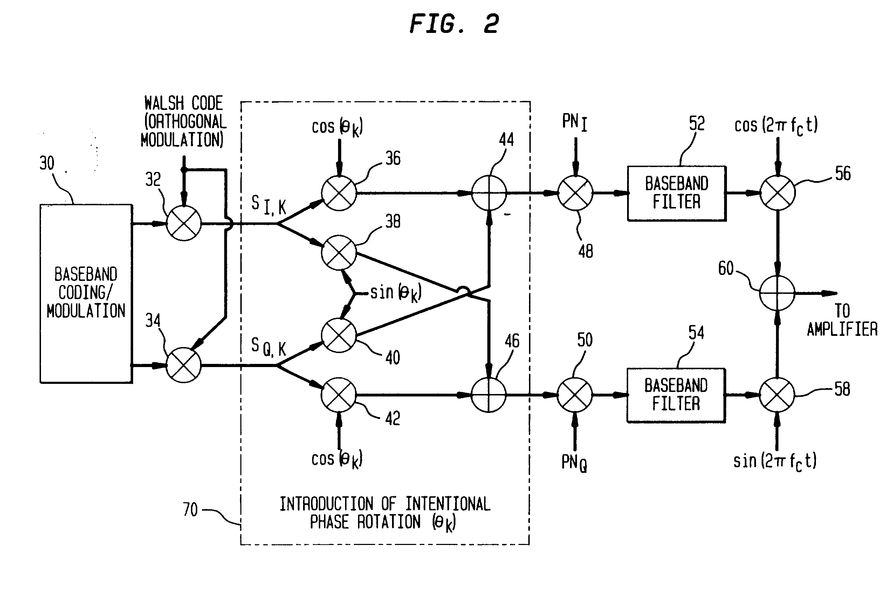

A block diagram of the physical layer of a representative embodiment of the present invention is shown in FIG. 2. The major difference from the existing systems or proposed systems and the present invention is the introduction of intentional phase rotation among different Walsh channels for the same wireless user in the base band signal. A baseband coding/modulation unit 30 provides an in-phase and a quadrature-phase signal which are coupled to corresponding multipliers 32 and 34. The multipliers 32 and 34 are coupled to a Walsh Code for orthogonal modulation. Multiplier 32 provides a signal $S_{I,k}$ which is the "signed" in-phase amplitude of Walsh channel k. Signal $S_{I,k}$ is coupled to multipliers 36 and 38. Multiplier 34 provides a signal $S_{Q,k}$ which is the "signed" quadrature-phase amplitude of Walsh channel k. Signal $S_{Q,k}$ is coupled to multipliers 40 and 42. $\theta_k$ is the introduced phase rotation for Walsh channel k. The $\cos(\theta_k)$ is coupled to multipliers 36 and 42. The $\sin(\theta_k)$ is coupled to multipliers 36 and 42. The output of multiplier 36 and the inverted output of multiplier 40 are coupled to adder 44. The output of multiplier 38 and the output of multiplier 42 are coupled to adder 46. The output of adder 44 and pseudo noise $PN_I$ are coupled to multiplier 48. The output of adder 46 and pseudo noise $PN_Q$ are coupled to multiplier 50. The output of multiplier 48 is coupled to a baseband filter 52. The output of multiplier 50 is coupled to a baseband filter 54. The output of baseband filter 52 and $\cos(2\pi f_c t)$ are coupled to multiplier 56. The output of baseband filter 54 and $\sin(2\pi f_c t)$ are coupled to multiplier 58. The output of multipliers 56 and 58 are coupled to adder 60. The signal provided by adder 60 is coupled to the transmitter power amplifier (not shown). The introduction of intentional phase rotation ($\theta_k$) section is shown by a shadow box 70 in FIG. 2.

Equation 1 represents a signal model for the CDMA wireless system

$$
\begin{aligned}
s(t) &= \sum_{k=1}^{N} \left\{ \begin{array}{l} \left( S_{I,k}\cos(\theta_k) - S_{Q,k}\sin(\theta_k) \right) PN_I(t)\cos(2\pi f_c t) \\ + \left( S_{I,k}\sin(\theta_k) + S_{Q,k}\cos(\theta_k) \right) PN_Q(t)\sin(2\pi f_c t) \end{array} \right\} \\
&= \cos(2\pi f_c t) PN_I(t) \left[ \sum_{k=1}^{N} S_{I,k}\cos(\theta_k) - S_{Q,k}\sin(\theta_k) \right] \\
&\quad + \sin(2\pi f_c t) PN_Q(t) \left[ \sum_{k=1}^{N} S_{I,k}\sin(\theta_k) + S_{Q,k}\cos(\theta_k) \right]
\end{aligned}
\qquad \text{Equation 1.}
$$

where s(t) is the transmit signal, $S_{I,k}$ is the "signed" in-phase amplitude of Walsh channel k, $S_{Q,k}$ is the "signed" quadrature-phase amplitude of Walsh channel k, $f_c$ is the carrier frequency, $\theta_k$ is the introduced phase rotation for Walsh channel k. Note that the "signed" amplitude is a product of a transmit amplitude (related to power control's need) with the chip information which can be either $\pm 1$. Also note that in IS-95 systems, in-phase component, $S_{I,k}$, and quadrature-phase component, $S_{Q,k}$, is the same for each Walsh code. The notation here is more general which considers the possibility of using different in-phase and quadrature-phase components.

The energy integrated over multiples of a carrier frequency's period say, T (which can be 3/ $f_c$, 5/ $f_c$, or a chip interval etc.) is represented by Equation 2.

$$
\begin{aligned}
E &= \int_T s^2(t)dt = \frac{T}{2} \left[ \begin{array}{l} \sum_{k=1}^{N} \left( S_{I,k}\cos(\theta_k) - S_{Q,k}\sin(\theta_k) \right)^2 \\ + \sum_{k=1}^{N}\sum_{\substack{l=1\\l\neq k}}^{N} \left( S_{I,k}\cos(\theta_k) - S_{Q,k}\sin(\theta_k) \right)\left( S_{I,l}\cos(\theta_l) - S_{Q,l}\sin(\theta_l) \right) \end{array} \right] \\
&\quad + \frac{T}{2} \left[ \begin{array}{l} \sum_{k=1}^{N} \left( S_{I,k}\sin(\theta_k) + S_{Q,k}\cos(\theta_k) \right)^2 \\ + \sum_{k=1}^{N}\sum_{\substack{l=1\\l\neq k}}^{N} \left( S_{I,k}\sin(\theta_k) + S_{Q,k}\cos(\theta_k) \right)\left( S_{I,l}\sin(\theta_l) + S_{Q,l}\cos(\theta_l) \right) \end{array} \right] \\
&= \frac{T}{2}\left\{ \sum_{k=1}^{N} S_{I,k}^2 + S_{Q,k}^2 \right\} + \frac{T}{2}\left\{ \sum_{k=1}^{N}\sum_{\substack{l=1\\l\neq k}}^{N} \left[ \begin{array}{l} \left( S_{I,k}S_{I,l} + S_{Q,k}S_{Q,l} \right)\cos(\theta_k - \theta_l) \\ + \left( S_{I,k}S_{Q,l} - S_{Q,k}S_{I,l} \right)\sin(\theta_k - \theta_l) \end{array} \right] \right\}
\end{aligned}
\qquad \text{Equation 2}
$$

In order to evaluate the performance improvement by the present invention, the following scenario is considered:

    1. Channel 1 to channel $N_h$ is used for one HSD user where intentional phase rotation is introduced and from channel $N_h + 1$ to channel N is used for IS-95 users where no phase rotation is introduced. This is represented by

Equation 3.

$$\theta_k = \begin{cases} k \bullet \phi & if\ k \le N_h \\ 0 & else \end{cases}$$

Equation 3.

2. The in-phase and quadrature-phase components are assumed to be the same as defined in the IS-95 standard, i.e., $S_{I,k} = S_{Q,k} = S_k\ \forall k$. However, extending this to a more general case of different in-phase and quadrature-phase components is straightforward.

3. The amplitude for the HSD user channels (Channel 1 to channel $N_h$) is the same but the sign can be different (due to coding and data), i.e., $S_k = b_k \bullet x\ \forall k \le N_h$ where $b_k = \pm 1$. The amplitude for the IS-95 users (channel $N_h$ +1 to channel N) will be based on a probability distribution.

The conditional power per integrated period (T) is represented by Equation 4

$$P(\phi|\mathbf{Y}) = \frac{E}{T} = \sum_{k=1}^{N} S_k^2 + T \sum_{k=1}^{N} \sum_{\substack{l=1 \\ l \ne k}}^{N} \left[ S_k S_l \cos(\theta_k - \theta_l) \right]$$

$$= N_h x^2 + \sum_{k=N_h+1}^{N} S_k^2 + \sum_{k=1}^{N} \sum_{\substack{l=1 \\ l \ne k}}^{N} \left[ S_k S_l \cos(\theta_k - \theta_l) \right]$$

Equation 4.

$$= x^2 \left\{ N_h + \sum_{k=N_h+1}^{N} y_k^2 + \sum_{k=1}^{N} \sum_{\substack{l=1 \\ l \ne k}}^{N} \left[ b_k b_l y_k y_l \cos(\theta_k - \theta_l) \right] \right\}$$

where

$$S_k = b_k \bullet y_k \bullet x$$
$$\mathbf{Y} = \begin{bmatrix} y_1 & \Lambda & y_N \end{bmatrix}$$

Equation 5.

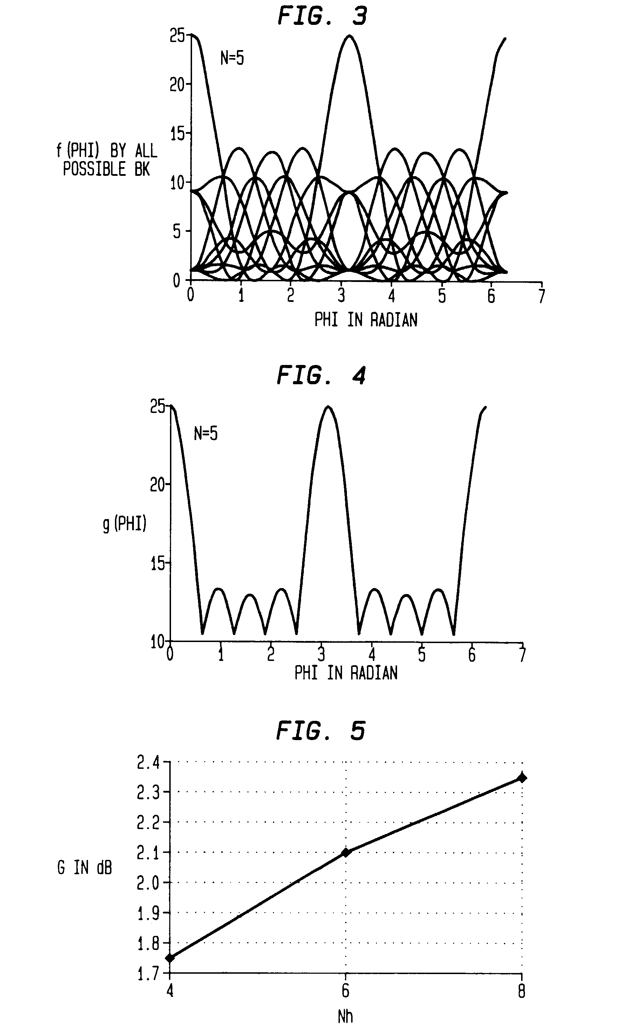

Note that there are $2^{N-1}$ combinations of different possible $b_k$'s. FIG. 3 shows an example of $P(\phi|Y)$ for different possible $b_k$'s at $N_h=N=5$, i.e., one HSD user using 5 channels with equal gain with no other users. In this case, $\mathbf{Y}$ is just a trivial identity vector [1 1 1 1 1]. To guarantee the reduced peak power, the max. of all possible $b_k$'s is selected and the maximum possible peak power conditioned on $\mathbf{Y}$ is defined as represented in Equation 6.

$$A(\phi|\mathbf{Y}) = \max_{b_k} P(\phi|\mathbf{Y})$$

Equation 6.

FIG. 4 shows the $A(\phi|\mathbf{Y})$ for the case of $N_h=N=5$.
In general, it can be shown that

$$\phi_{optimal} = \frac{\pi}{N_h}$$

Equation 7.

is the optimal phase rotation to minimize the peak chip power for the case of $N_h=N$, i.e., where there is no user/channel that does not allow phase rotation (e.g., IS-95 users) and there are $N_h$-channel usage all allowing phase rotation and they are with equal gain.

When users/channels exist that do not allow phase rotation in the system, the relative gains (**Y** vector) will play an important role in the peak power reduction and the choice of optimal phase rotation. It should be understood that once a call has been set up, it will be practical in implementation to maintain the same phase rotation for that particular users during that call duration. To simplify the implementation, in the following the phase rotation of Equation 7 will be used conditioned on the HSD user's number of channel usage but regardless of all other user's phase rotation.

The power gain (peak power reduction) conditioned on a realization of **Y** is defined by Equation 8.

$$G(\mathbf{Y}) = \frac{A(\phi = 0 | \mathbf{Y})}{A\left(\phi = \dfrac{\pi}{N_h} | \mathbf{Y}\right)} \qquad \text{Equation 8.}$$

Since the **Y** vector is the relative gain among different users/channels, the average gain over all possible realization of **Y** can then be obtained by Equation 9

$$G = \int G(Y) f(Y) dY \qquad \text{Equation 9.}$$

where $f(\mathbf{Y})$ is the probability density function of **Y**.

To obtain some numerical examples, a scenario of log-normal distribution of **Y** is assumed. Furthermore, a standard deviation of 4 dB of that log-normal distribution is assumed. FIG. 5 shows the gain represented by Equation 9, that is peak power reduction in dB where $N_1 = 4$, i.e. there exists 4 channels without phase rotation.

A high data rate or a high power users' signal can be decomposed into several low power or low rate signal/waveforms. Each of the waveforms are then offset by a differential intentional phase rotation. In this case the decomposed waveforms are handled essentially as "equivalent users".

One application of the present invention is in the forward link signal of the IS-95 based system. Currently IS-95 forward link signals require that all "equivalent users" have the same phase. Having the same phase generates the worst peak to average power ratio for the base station power amplifier. The actual amplifier head room that is reserved to handle this is several dBs, which therefore results in a considerable loss of power efficiency. By applying an intentional phase rotation to each "equivalent user in the IS-95 forward wireless link, the constructive sum of the aggregate wave form is reduced towards a minimum.

There are significant reasons for improving the forward link first. In high speed data transmission, which is described in the new IS-95-B standard, downloading data from the Internet has been recognized as a dominant traffic demand. Forward link usage is expected to be higher than reverse link usage. In 13K IS-95 practice, it has been well known that the forward link is the bottleneck in terms of capacity. Slow power control and less coding gain are major factors. Even if EVRC (8K) is deployed later, it is still possible (depending on locations) that the forward link will be the limiting link for capacity due to deployment constraints where multiple dominant pilots are prevalent. Accordingly, the implementation of the present invention in the forward link will improve the base station coverage area and capacity by reducing the peak to average ratio in the power amplifier of the base station transmitter. In order for an HSD terminal (cellular mobile unit 20) to correctly demodulate the aggregate signal, the intentional phase rotation can be sent by a message in the air interface or by defining the intentional phase rotation in a standard.

Numerous modifications and alternative embodiments of the invention will be apparent to those skilled in the art in view of the foregoing description. The present invention for reducing power amplifier headroom in a wireless transmission system can be used for all of the users served by the same base station including voice users which occupy only one Walsh channel as well as other HSD users. Walsh code modulation is one way to achieve orthogonal modulations. The present invention can also be used with other systems that employ orthogonal modulation on channels. Accordingly, this description is to be construed as illustrative only and is for the purpose of teaching those skilled in the art the best mode of carrying out the invention. Details of the structure may be varied substantially without departing from the spirit of the invention and the exclusive use of all modifications which come within the scope of the appended claim is reserved.

## Claims

1. A method for reducing power amplifier headroom in a wireless transmission system comprising the steps of:

   selecting at least one wireless user;
   allocating multiple channels to said at least one selected wireless user;
   rotating phase among said allocated multiple channels.

2. A method as claimed in claim 1 further comprising the additional step allocating a different channel to another wireless user wherein said at least one selected wireless user and said another wireless user are compatible within the wireless transmission system.

3. Apparatus for reducing power amplifier headroom in a wireless transmission system comprising:

   a means for selecting at least one wireless user;
   a means for allocating multiple channels to said at least one selected wireless user;
   phase rotatipn circuit for rotating phase among said allocated multiple channels.

4. A method as claimed in claim 1, or apparatus as claimed in claim 3, wherein said allocated multiple channels are defined using Walsh codes.

5. Apparatus as claimed in claim 3 further comprising a means for allocating a different channel to another wireless user wherein said at least one selected wireless user and said another wireless user are compatible within the wireless transmission system.

6. A method as claimed in claim 2, or apparatus as claimed in claim 5, wherein said different channel is a different channel defined using Walsh codes.

7. A method as claimed in claim 2, or apparatus as claimed in claim 6, wherein said different channel is not phase rotated.

8. A method as claimed in claim 1, or apparatus as claimed in claim 3, wherein said at least one selected wireless user is a high speed data user.

9. A method or apparatus as claimed in claim 8 wherein said high speed data user is defined as an IS-95-B standard wireless communication high speed data user.

10. A method as claimed in claim 2, or apparatus as claimed in claim 5, wherein said another wireless user is defined as an IS-95 standard wireless communication user.

11. A method as claimed in claim 1, or apparatus as claimed in claim 4, wherein said phase rotation among said allocated multiple channels comprises an incremental phase rotation across said allocated multiple channels.

12. Apparatus as claimed in claim 5 wherein an orthogonal modulation circuit is coupled to inputs of said phase rotation circuit.

13. Apparatus for reducing power amplifier headroom in a CDMA transmission system comprising:

   an orthogonal modulation circuit utilizing a Walsh code for modulating an in-phase signal and a quadrature signal, said orthogonal modulation circuit having an in-phase output and a quadrature output;
   phase rotation circuit for rotating phase coupled to said in-phase output and said quadrature output for producing a phase rotated in-phase signal and a phase rotated quadrature signal;
   wherein multiple channels defined by Walsh codes are associated with a particular wireless user.

14. A system for reducing power amplifier headroom in a CDMA transmission system comprising:

   an orthogonal modulation circuit utilizing a Walsh code for modulating an in-phase signal and a quadrature signal, said orthogonal modulation circuit having an in-phase output and a quadrature output; and

phase rotation circuit for rotating phase coupled to said in-phase output and said quadrature output for producing a phase rotated in-phase signal and a phase rotatcd quadrature signal;
wherein multiple channels defined by Walsh codes are associated with a particular wireless user whereby the power amplifier headroom is reduced.

15. Apparatus as claimed in claim 13, or a system as claimed in claim 14, wherein said phase rotation circuit provides an incremental phase rotation across said multiple channels.

16. Apparatus as claimed in claim 13, or a system as claimed in claim 14, wherein said phase rotation circuit provides a pseudo random phase rotation across said multiple channels.

FIG. 1

SWITCHED WIRED NETWORK 12

MOBILE TELEPHONE SWITCHING OFFICE 10

18 CELL

14 BASE STATION 16 20

18 CELL

14 BASE STATION 16 20

18 CELL

14 BASE STATION 16 20

18 CELL

14 BASE STATION 16 20 20 20

EP 0 924 870 A2

FIG. 2

## FIG. 3

## FIG. 4

## FIG. 5